## Europäisches Patentamt

## European Patent Office

## Office européen des brevets

(11) Veröffentlichungsnummer: **0 293 570 B1**

(12) **EUROPÄISCHE PATENTSCHRIFT**

(45) Veröffentlichungstag der Patentschrift:
**23.05.90**

(51) Int. Cl.⁵: **F16K 3/24**, F16K 29/00

(21) Anmeldenummer: **88105139.5**

(22) Anmeldetag: **30.03.88**

(54) **Absperrventil.**

(30) Priorität: **22.05.87 DE 3717239**

(43) Veröffentlichungstag der Anmeldung:
**07.12.88 Patentblatt 88/49**

(45) Bekanntmachung des Hinweises auf die Patenterteilung:
**23.05.90 Patentblatt 90/21**

(84) Benannte Vertragsstaaten:
**AT BE CH DE ES FR GB GR IT LI LU NL SE**

(56) Entgegenhaltungen:
**DE-U- 8 219 177**
**GB-A- 2 198 812**
**US-A- 1 872 211**
**US-A- 2 530 433**
**US-A- 3 658 083**
**US-A- 3 815 871**

(73) Patentinhaber: **Titus, Hans Joachim, Dipl.-Ing., Le Donatello 13, Avenue des Papapins,
MC-98000 Monaco(MC)**

(72) Erfinder: **Titus, Hans Joachim, Dipl.-Ing., Le Donatello 13, Avenue des Papapins,
MC-98000 Monaco(MC)**

(74) Vertreter: **Raeck, Wilfrid, Dipl.-Ing., Moserstrasse 8,
D-7000 Stuttgart 1(DE)**

## Beschreibung

Die Erfindung betrifft ein Absperrventil mit einem Gehäusedurchgang zwischen zwei Endflanschen, einer spitzwinklig in den Gehäusedurchgang mündenden zylindrischen Führung, in der ein verdrehbarer, zylindrischer Ventilkörper mittels einer elliptisch verlaufenden Dichtung abgedichtet geführt ist, einer einen im allgemeinen elliptischen Umriß aufweisenden Stirnfläche des Ventilkörpers und mit Betätigungsmitteln, die den Ventilkörper zum Absperren des Gehäusedurchganges um 180° verdrehen.

Bei einem aus dem DE-GM 82 19 177 bekannten Absperrventil der vorbezeichneten Art befindet sich in der in dem Gehäusedurchgang mündenden Führung ein verdrehbarer Ventilkörper mit zylindrischer Mantelfläche, dessen Stirnende eine schräge Drosselfläche von elliptischem Umriß bildet, so daß aufgrund dieser Gestaltung eine genaue und kontinuierliche Einstellung des Ventildurchflusses mit nur einer halben Drehung des Ventilkörpers ermöglicht wird, wobei sowohl der vollständig geschlossene Zustand als auch der vollständig geöffnete Zustand erreicht werden.

Aus der US-PS 3 658 083 ist andererseits ein Absperrventil bekannt, das als Ablauf- oder Boden-Auslaufventil von Behältern und Apparaten Anwendung findet, in denen Flüssigkeiten und andere fließ- oder schüttfähige Substanzen ent halten sind. Bei diesem bekannten Bodenventil ist in einer im Behälterboden mündenden senkrechten Führung ein zylindrischer Ventilkörper vorgesehen, der mit Hilfe einer inneren Spindel senkrecht verstellt werden kann. Bei seiner Absenkbewegung gibt in einer bestimmten Höhe die Oberkante des Ventilkörpers einen von der senkrechten Führung seitlich abgehenden, abwärts geneigten Ablaufstutzen frei, dessen Öffnung je nach Einstellung der Höhenlage des Ventilkörpers mehr oder weniger verschlossen ist. Der notwendig seitlich umgelenkte Verlauf des Ablaufstutzens verzögert die Behälterentleerung oder ist Anlaß von Verstopfungen, wenn es sich um schüttfähige Substanzen oder um Massen von geringer Viskosität händelt. Darüber hinaus besteht bei chemischen Apparaten, wie Kristallisationsbehältern oder Trocknern grundsätzlich Gefahr, daß sich am Behälterboden Produktkrusten bilden, die beim Öffnen eines Ventils, Schiebers oder Kugelhahns nicht immer zerstört werden und folglich den Behälterablauf behindern oder insgesamt verstopfen.

Der Erfindung liegt die Aufgabe zugrunde, ein Absperrventil der im Oberbegriff des Hauptanspruches angegebenen Art dahingehend zu verbessern und weiterzubilden, daß es bei Anwendung als Bodenablauf eines Behälters den Behälterboden von Vertiefungen und ähnlichen Toträumen freihält, in denen die chemische, mechanische oder thermische Behandlung des Behältergutes gestört oder behindert werden könnte, und mit dem sich insbesondere im Bereich des Ventileinganges, gebildete Ablagerungen oder Krusten automatisch sowohl beim Öffnen als auch beim Schließen beseitigen lassen.

Erfindungsgemäß wird diese Aufgabe dadurch gelöst, daß die in den Gehäusedurchgang mündende Führung bis in den Bereich des am Einlaß angeordneten Flansches fortgesetzt ist, dort eine elliptische Öffnung bildet und nahe der Flanschstirnfläche wenigstens eine elliptische Dichtung enthält, daß der Gehäusedurchgang ein im allgemeinen senkrecht zur Öffnung im Einlaßflansch verlaufendes Fallrohr bildet, und daß die Betätigungsmittel so ausgebildet sind, daß sie den Ventilkörper zum Absperren des Gehäusedurchgangs in einen gegenüber seiner Schließstellung um 180° gedrehten Zustand axial verschieben, bis die Öffnung halb geschlossen und die Dichtung zur Hälfte überdeckt ist, worauf erst anschließend eine 180°-Drehung erfolgt.

Da bei der vorgeschlagenen Bauart jeder Totraum oberhalb des den Durchgang abschließenden Ventilkörpers vermieden worden ist, kann im Behälter auch kein Bodensumpf entstehen, das heißt kein Bereich, der nicht in den darüberliegenden Kristallisations-, Trocknungs-, Mischungs- und/oder Granulierungsprozeß einbezogen ist. Diese Merkmale haben vor allem im Bereich von Pharmaprodukten entscheidende Bedeutung, wenn zur Herstellung von fremdpartikelfreier steriler Injektionsware auch jede Art von Contamination des Produktes mit der eigenen Mutterlauge verhindert wird. Beispielsweise sei in diesem Zusammenhang auf die Gelbfärbung von an sich weißen Endprodukten hingewiesen, die im wesentlichen auf das Bestehen von Toträumen in den Absperrorganen zurückzuführen ist.

Ein weiterer wichtiger Gesichtspunkt des erfindungsgemäßen Absperrventiles wird gebildet durch die kombinierte Dreh- und Axialbewegung des zur Achse des Ventilkörpers in einem winkel längsgeführten zylindrischen Ventilkörpers, weil mit dieser Konzeption eine geringstmögliche Bauhöhe des Ventilgehäuses zwischen Einlaßflansch und Austrittsflansch erreicht werden kann. Die kombinierte Dreh- und Axialbewegung des Ventilkörpers ist in Verbindung mit der besonders gestalteten geneigten Stirnfläche in der Lage, das im Bereich der Einlaßöffnung, insbesondere am Dichtungsring anhaftende Produkt während des Schließvorganges abzuschaben. Dieser Gesichtspunkt ist besonders wichtig für den sicheren Ventilabschluß; denn nach dem Entleerungsvorgang insbesondere von Trockenprodukten ist der Dichtungssitz grundsätzlich mit Puder oder Kristallen bestäubt, gegebenenfalls auch mit Paste oder einem dickflüssigen Brei von Verkrustungen. Erfindungsgemäß ist es möglich, den Ventilkörper so in die nahe dem Einlaßflansch angeordnete Dichtung so einzuschieben, daß das anhaftende Produkt von der Umfangskante des Dichtringes abgeschabt wird und erst danach der zylindrische Ventilkörper in die von Anhaftungen befreite Dichtung mit dem zylindrischen Umfang hineingedreht wird. Nur durch diese Relativbewegung zwischen dem zylindrischen Ventilkörper und der ovalen bzw. elliptischen Dichtung ist es möglich, das Ventil während des Betriebes vakuumdicht abzuschließen.

Weitere Merkmale und Vorteile der Erfindung ergeben sich aus der nachfolgenden Beschreibung eines Ausführungsbeispieles eines Absperrventiles in Verbindung mit den Zeichnungen.

Es zeigen, jeweils schematisch,

Bild 1 : einen senkrechten Schnitt durch ein an der Unterseite eines Behälters angeflanschten Ventiles mit dem in Schließstellung befindlichen zylindrischen Ventilkörpor,

Bild 2 das Ventilgehäuse in gleicher Darstellung wie in Bild 1, jedoch mit einem halbgeöffneten, um 180° gedrehten Ventilkörper,

Bild 3 das Ventilgehäuse wie in Bild 1 mit vollständig geöffnetem Ventilkörper und

Bild 4 in ähnlicher Schnittdarstellung wie zuvor eine abgeänderte Ausführungsform eines Ventils mit geneigtem Fallrohr

Entsprechend der zeichnerischen Darstellung ist ein Ventilgehäuse 1 eines Absperr- oder Bodenauslaßventiles an der Unterseite eines gewölbten Behälters 9 angeordnet, der einen eingeschweißten Bodenflansch 8 enthält, an den das Absperrventil mit seinem Einlaßflansch 12 angeschraubt ist. Zwischen dem Einlaßflansch 12 und einem Flansch 10 an der Auslaßseite veräuft ein Durchgang 16, der ein im allgemeinen senkrechtes Fallrohr bildet. Das Ventilgehäuse 1 ist so konstruiert, daß es an einen genormten Behälterflansch 8 ohne Anpassungs- oder Nacharbeiten ohne weiteres abgedichtet angeschraubt werden kann.

Zum Schließen und Öffnen des Ventiles dient en zylindrischer Ventilkörper 2, der mit Hilfe eines in Bild 2 an der Stelle 5 schematisch angedeuteten Antriebes in einer zur Vertikalachse des Ventilgehäuses in einem Winkel zwischen 30° und 60° (hier speziell etwa 45°) geneigt verlaufenden Führungskanal 14 längsverschiebbar sowie drehbar abgedichtet geführt ist. Dazu dienen Dichtungselemente 3, 4 und 7 sowie eine Abstützung des Ventilkörpers 2 mit Hilfe von Gleitlagern 6 innerhalb des Führungskanales 14.

Wie aus Bild 1 ersichtlich, besitzt der Ventilkörper 2 eine Stirn- oder Frontfläche 18, die dem Verlauf der Stirnfläche des Einlaßflansches 12 angepaßt ist. Beim gezeigten Ausführungsbeispiel ist zur Vermeidung von Toträumen sowohl die Stirnfläche des Einlaßflansches 12 als auch die Stirnfläche 18 des Ventilkörpers 12 an die Krümmung oder Wölbung des Behälterbodens 9 angepaßt. Auf diese Weise wird jeglicher Totraum vermieden, so daß auch im Bereich des Ventiles kein Behälter-Bodensumpf entstehen kann; vielmehr ist der durch das Ventil besetzte Bereich am Behälterboden vollständig geschlossen und dieser Bereich folglich in das im Behälter ablaufende Verfahren der Kristalisation oder Trocknung oder Mischung oder Granulierung mit einbezogen.

Zum Öffnen des Ventiles wird der Ventilkörper 2 gemäß Bild 2 zunächst mit Hilfe des Antriebes 5 um 180° gedreht, so daß die ursprünglich etwa waagerecht verlaufende Stirnfläche 18 in einen vertikalen Verlauf gelangt und bei dieser Bewegung einen sich möglicherweise am Behälter gebildeten Bodensatz aufbricht. Ein solcher Aufbrechvorgang ist für einen automatisch ablaufenden Entleerungsvorgang aus dem Behälter von entscheidender Bedeutung.

Gemäß Bild 3 befindet sich der Ventilkörper 2 in seiner vollständig zurückgeführten Öffnungsstellung, in die er nach der 180°- Drehung aus Bild 2 überführt worden ist. Die Stirnfläche 18 des Ventilkörpers 2 bildet nun gewissermaßen eine Fortsetzung der senkrechten Wandung des unteren Fallrohres 16, womit ein ansatzloser Produktauslaß gewährleistet ist.

Die gezeigte Anordnung, bei der die Bewegungsachse des Ventilkörpers 2 mit der vertikalverlaufenden Hauptachse des Ventilgehäuses 1 einen Winkel zwischen etwa 30° und 60° vorzugsweise hier 45° bildet, ergibt eine geringsmögliche Bauhöhe des Ventilkörpers und gleichzeitig eine für den möglichst unbehinderten Produktaustritt aus dem Behälter brauchbare elliptische Öffnung des zylindrischen Führungskanales 14 im Bereich des Einlaßflansches 12. In der elliptischen Öffnung im Einlaßflansch 12 des Absperrventiles befindet sich nahe diesem eine elliptische Dichtung 3, die in ähnlicher Ausführung auch als elliptische Dichtung 4 im Führungskanal 14 untergebracht ist. Der geneigte Führungskanal 14 erstreckt sich, im Beispiel unter etwa 45° zur Ventilhauptachse geneigt durch das Ventilgehäuse 1 und bildet die Ventileinlaßöffnung an der Oberseite des Ventilgehäuses im Bereich des Einlaßflansches 12.

Aus der zeichnerischen Darstellung, insbesondere aus Bild 3 erkennt man, daß die obere elliptische Öffnung des Führungskanales im Einlaßflansch 12 an der linken Seite etwa an der gleichen Stelle begrenzt ist, wie die linke Seite des Fallrohres 16. Der zylindrische Durchmesser des Fallrohres 16, der sich bis an die Unterseite der schräg verlaufenden Führungsbohrung 14 erstreckt, besitzt im gezeigten Beispiel etwa den gleichen Durchmesser wie der Ventilkörper 2. Rechts im Bild 3 erstreckt sich die elliptische Einlaßöffnung nach rechts über die Projektion des Fallrohres 16 hinaus, wobei diese Anordnung der raumsparenden Unterbringung gewählt worden, jedoch nicht zwingend ist. Bei einer steileren Neigung des Führungsrohres 16 könnte auch eine symmetrische Lage der oberen Einlaßöffnung zur senkrechten Ventilachse vorgesehen sein.

Um das Ventil aus der Stellung in Bild 3 zu schließen, wird nach dem Entleerungsvorgang des Behälters der Ventilkörper wieder in seine Schließstellung gemäß Bild 1 bewegt. Beim Entleeren insbesondere von Trockenprodukten ist die Dichtfläche 20 im Einlaßbereich mit Puder oder Kristallen bestäubt. Beim Entleeren von Pasten oder dickflüssigem Brei treten in diesem Bereich Verkrustungen auf. Da alle bekannten Ventilkörper nur mit Hilfe einer Axialbewegung auf ihren Dichtungssitz gefahren werden, kann wegen des am Dichtungssitz anhaftenden Produktes grundsätzlich keine ausreichende Abdichtung am Ventil erreicht werden. Beim erfindungsgemäßen Absperrventil wird während der Schließbewegung, die sich in umgekehrter Reihenfolge wie die Öffnungsbewegung vollzieht, mit Hilfe der Axialbewegung des Ventilkörpers 2 das am Dichtring 3 anhaftende Produkt zunächst abgeschabt oder abgestreift, bevor die Schließstellung erreicht wird. Dabei wird der Schabevorgang durch die am Umfang befindliche Kante des Ventilkörpers im Eingriff mit dem Dichtring vollzogen. Nach Erreichung der Endlage als Abschluß der Axialbewegung gemäß Bild 2 erfolgt das Hineindrehen des Ventilkörpers in die Schließstellung gemäß Bild 1, wobei auch während dieser Drehbewegung die Kanten der abgeschrägten Stirnfläche den Dichtring 3 von Staub- und Produktanlagerungen be freien. Aufgrund dieser Relativbewegung zwischen zylindrischem Ventilkörper 2 und der Dichtung 3 ist es möglich, den Ventilsitz mit Hilfe des Ventilkörpers vakuumdicht zu schließen.

Bild 4 zeigt eine gegenüber den vorangehend beschriebenen Darstellungen abgeänderte Ausführungsform eines Ventils gemäß der Erfindung, bei dem unter Verwendung des gleichen Prinzips hier as Fallrohr 16 zwischen Einlaßflansch 12 und Auslaßflansch 10 eine leichte Neigung aufweist. Diese Neigung kann unter Berücksichtigung der von Schüttgut her bekannten Schüttwinkel als Größtwert ungefähr 30° zur Senkrechten betragen, wobei die Fallrohrachse gemäß Bild 4 in einem Winkel von 15° zur Senkrechten geneigt ist, so daß in jedem Fall eine einwandfreie Schüttzung des aus dem Behälter abzufüllenden Schüttgutes gewährleistet ist.

De Öffnungsstellung und eine wichtige Zwischenstellung des zylindrischen Ventilkörpers 2 sind in Bild 4 mit unterbrochenen Linien angedeutet. Zum Öffnen ist der Ventilkörper 2 zunächst aus seiner Schließstellung um 180° gedreht, so daß seine in der Schließstellung waagerecht verlaufende Stirnfläche 18 den gestrichelt gezeigten geneigten Verlauf einnimmt. Wiederum wird bei dieser Drehbewegung eine sich am Behälterboden gebildete Kruste aufgebrochen. Anschließend wird der Ventilkörper 2 in Längsrichtung zurückbewegt, so daß seine Stirnfläche 18 die untere mit unterbrochenen Linien gezeigte Öffnungsstellung einnimmt, in der sie sich an die untere Wand des Fallrohres 16 anschließt.

Die zylindrische Führungs- und Dichtfläche 14 des Ventilkörpers 2, die im Beispiel nach Bild 4 mit ungefähr 30° zur Senkrechten geneigt ist, erstreckt sich als obere Dichtfläche 20 bis zur Stirnseite des Einlaßflansches 12, wobei wie im zuerst beschriebenen Beispiel entlang der Kante 22 eine Verschneidung mit dem zylindrischen Fallrohr 16 vorgesehen ist. Mit der Neigung des Fallrohrs 16 gemäß Bild 4 wird die Ausdehnung der elliptischen Schnittfläche in der Längsachse reduziert, um so bei einem vorgegebenen Durchmesser des Bunkerflansches 8 eine größere Öffnungsweite, d. h. einen größeren Durchmesser des Ventilkörpers 2 und auch des Fallrohrs 16 unterzubringen. Aus dem Vergleich zwischen Bild 1 und Bild 4 erkennt man, daß bei gleichem Durchmesser des zylindrischen Ventilkörpers 2 und auch des Fallrohres 16 und bei somit für die Durchsatzmenge gleichbleibendem Öffnungsquerschnitt bei der Ausführungsform gemäß Bild 4 wesentlich geringere Außenabmessungen notwendig werden. Insbesondere bei kleineren Nennweiten wirkt sich diese Variante auf die Gesamtabmessungen günstig aus.

Abgesehen von doppelten elliptischen Dichtungen 3 im Bereich der Dichtfläche 20 bestehen keine baulichen Änderungen gegenüber der zuerst beschriebenen Ausführungsform, mit der auch hinsichtlich der Bewegungsabläufe des Ventilkörpers Übereinstimmung besteht.

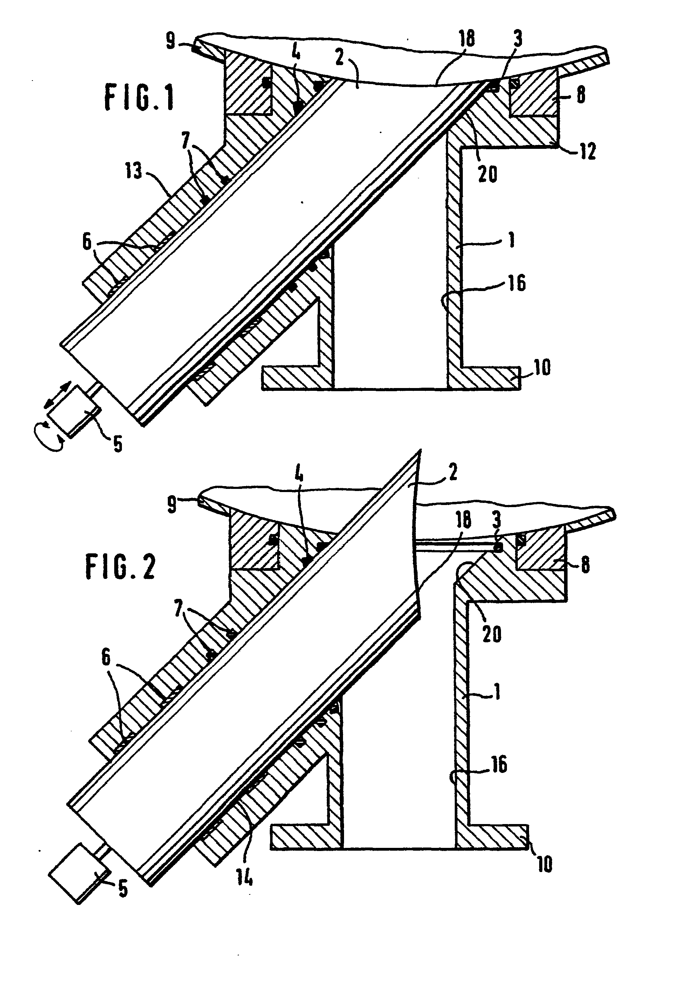

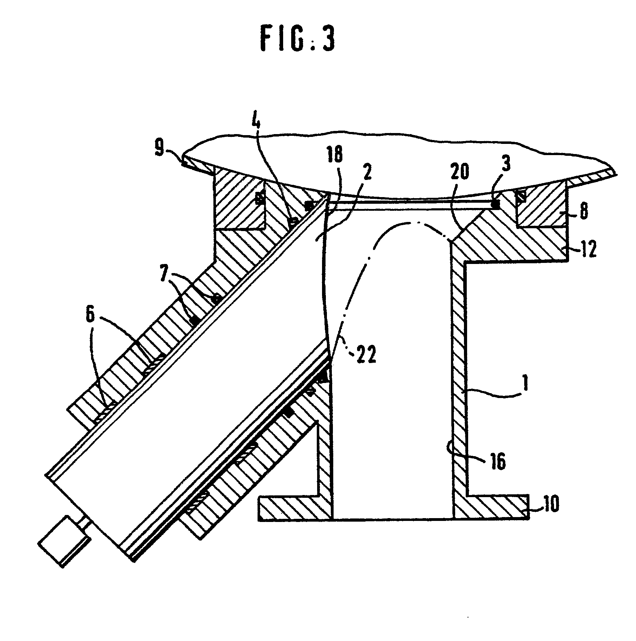

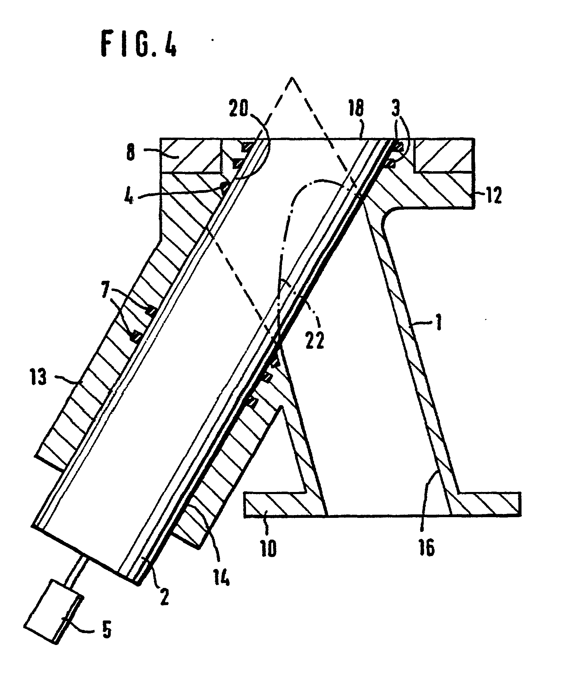

**Patentansprüche**

1. Absperrventil mit einem Gehäusedurchgang (16) zwischen zwei Endflanschen (10, 12), einer spitzwinklig in den Gehäusedurchgang (16) mündenden zylindrischen Führung (14), in der ein verdrehbarer zylindrischer Ventilkörper (2) mittels einer elliptisch verlaufenden Dichtung (4, 7) abgedichtet geführt ist, einer einen im allgemeinen elliptischen Umriß aufweisenden Stirnfläche (18) des Ventilkörpers (2), und mit Betätigungsmitteln (5), die den Ventilkörper (2) zum Absperren des Durchgangs (16) um 180° verdrehen, dadurch gekennzeichnet,
- daß die in den Gehäusedurchgang (16) mündende Führung (14) bis in den Bereich des am Einlaß angeordneten Flansches (12) fortgesetzt ist, dort eine elliptische Öffnung bildet und nahe der Flanschstirnfläche wenigstens eine elliptische Dichtung (3) enthält,
- daß der Gehäusedurchgang (16) ein im allgemeinen senkrecht zur Öffnung im Einlaßflansch (12) verlaufendes Fallrohr bildet,
- und daß die Betätigungsmittel so ausgebildet sind, daß sie den Ventilkörper (2) zum Absperren des Gehäusedurchgangs (16) in einen gegenüber seiner Schließstellung um 180° gedrehten Zustand axial verschieben, bis die Öffnung halb geschlossen und die Dichtung (3) zur Hälfte überdeckt ist, worauf erst anschließend eine 180°-Drehung erfolgt.

2. Absperrventil nach Anspruch 1, dadurch gekennzeichnet, daß die Stirnfläche (18) des Ventilkörpers (2) dem Verlauf der Stirnfläche des Einlaßflansches bzw. der Wölbung des Behälterbodens angepaßt ist.

3. Absperrventil nach Anspruch 1 oder 2, dadurch gekennzeichnet, daß der zwischen dem Gehäusedurchgang (16) und der Längsachse der Führung (14) des Ventilkörpers (2) gebildete spitze Winkel im Bereich zwischen etwa 30° und 60° liegt.

4. Absperrventil nach einem der vorhergehenden Ansprüche, dadurch gekennzeichnet, daß der Gehäusedurchgang teilweise aus einem zylindrischen Fallrohr (16) besteht, dessen Durchmesser gleich oder kleiner ist als der Durchmesser des Ventilkörpers (2) und das von einem Bereich unterhalb der elliptischen Öffnung und Dichtung (3) im Einlaßflansch (12) ausgeht.

5. Absperrventil nach einem der vorhergenenden Ansprüche, dadurch gekennzeichnet, daß der eine schmalseitige Umfang der elliptischen Öffnung im Einlaßflansch (12) ungefähr senkrecht über der einen Seite des Fallrohres (16) angeordnet ist.

6. Absperrventil nach einem der vorhergehenden Ansprüche, dadurch gekennzeichnet, daß der Ventilkörper (2) in seiner Führung (14) so weit zurückbewegbar ist, daß er in um 180° verdrehtem Zustand mit seiner Stirnseite (18) außerhalb von Projektionslinien verbleibt, die zwischen dem elliptischen Öffnungsrand im Einlaßflansch (12) und der darunterliegenden Fallrohr-Wand verlaufen.

7. Absperrventil nach einem der vorhergehenden Ansprüche, dadurch gekennzeichnet, daß das Fallrohr (16) maximal zum Schüttwinkel (z. B. 30°) des zu entleerenden Schüttgutes bezüglich der Senkrechten geneigt verläuft, insbesondere mit einer der Neigung der Führung (14) entgegengesetzten Neigung.

8. Absperrventil nach einem der vorhergehenden Ansprüche, dadurch gekennzeichnet, daß das zylindrische Fallrohr (16) mit Verschneidungslinien, bzw. -kanten (22) an die Unterseite der sich geneigt durch das Ventilgehäuse (1) erstreckenden Führung (14) angeschlossen ist.

## Claims

1. Cut-off valve with a housing passage (16) between two end flanges (10, 12), a cylindrical guideway (14) ending at an acute angle in the housing passage (16) into which a twistable cylindrical valve body (2) is sealingly routed by means of an elliptical seal (4, 7), a face (18) of the valve body (2) exhibiting a generally elliptical contour, and with actuating means (5), which twist the valve body by 180° to close the passage (16), characterized in that
- the guideway (14) ending in the housing passage (16) continues up to the area of the flange (12) situated at the inlet, there forms an elliptical opening and contains at least one elliptical seal (3) near the face of the flange,
- the housing passage (16) forms a downpipe extending generally vertical to the opening in the inlet flange (12),
- and in that the actuating means are designed such that they axially shift the valve body (2) to close the housing passage (16) into a state twisted by 180° relative to its closed position until the opening is half closed and the seal (3) is half covered, with a 180° turn ensuing only thereafter.

2. Cut-off valve as per claim 1, characterized in that the face (18) of the valve body (2) is adjusted to the contour of the face of the inlet flange or to the curve of the bottom of the container.

3. Cut-off valve as in claim 1 or 2, characterized in that the acute angle formed between the housing passage (16) and the longitudinal axis of the guide (14) of the valve body (2) ranges from 30° to 60°.

4. Cut-off valve as in one of the previous claims, characterized in that the housing passage consists in part of a cylindrical downpipe (16) whose diameter is smaller than or equal to the diameter of the valve body (2) and which proceeds from an area below th eelliptical opening and seal (3) in the inlet flange (12).

5. Cut-off valve as in one of the previous claims, characterized in that the one narrow edged circumference of the elliptical opening in the inlet flange (12) is situated in a roughly vertical manner over the one side of the downpipe (16).

6. Cut-off valve as in one of the previous claims, characterized in that the valve body (2) in its guide (14) may be moved back to such an extent that it remains in a state turned by 180° with its face (18) outside of the projection lines, which run between the elliptical opening edge in the inlet flange (12) and the downpipe wall lying thereunder.

7. Cut-off valve as in one of the previous claims, characterized in that the downpipe (16) runs maximally inclined to the angle of repose (e.g., 30°) of the bulk material to be emptied relative of the vertical, in particular with an inclination opposite to that of the guide (14).

8. Cut-off valve as in one of the previous claims, characterized in that the cylindrcal downpipe (16) is connected to the lower side of the guide (14) inclined through the valve housing (1) via intersecting lines or edges (22).

## Revendications

1. Vanne d'arrêt comportant un passage (16) de carter entre deux brides terminales (10, 12), un guidage cylindrique (14) débouchant à angle aigu dans le passage (16) du carter, guidage dans lequel est guidé, d'une façon étanche au moyen d'un joint (4, 7) à tracé elliptique, un corps de vanne cylindrique (2) que l'on peut faire tourner, une surface frontale (18) du corps de vanne (2) présentant un contour en général elliptique, et comportant des moyens de commande (5) qui font tourner le corps de vanne (2) de 180° pour fermer le passage (16), caractérisée en ce que:
- le guidage (14) débouchant dans le passage (16) du carter se continue jusque dans la zone de la bride (12) placée à l'admission, forme à cet endroit une ouverture elliptique et contient au voisinage de la bride frontale au moins un joint elliptique (3),
- le passage (16) du carter forme un tube de descente disposé généralement perpendiculairement par rapport à l'ouverture dans la bride d'admission (12),
- les moyens de commande (5) sont réalisés de telle façon que, pour la fermeture du passage (16) du carter, ils font déplacer axialement le corps de vanne (2) dans une position orientée à 180° de sa position de fermeture, jusqu'à ce que l'ouverture soit à demi fermée et le joint (3) à demi couvert, après quoi seulement il se produit une rotation de 180°.

2. Vanne d'arrêt suivant la revendication 1, caractérisée en ce que la surface frontale (18) du corps de vanne (2) est adaptée au tracé de la surface frontale de la bride d'admission et à la courbure du fond du récipient.

3. Vanne d'arrêt suivant la revendication 1 ou la revendication 2, caractérisée en ce que l'angle aigu formé entre le passage (16) du carter et l'axe longitudinal du guidage (14) du corps de vanne (2) est compris sensiblement entre 30° et 60°.

4. Vanne d'arrêt suivant l'une quelconque des revendications précédentes, caractérisée en ce que le passage de carter est constitué partiellement d'un tuyau cylindrique de descente (16), dont le diamètre est plus petit ou égal au diamètre du corps de vanne (2) et qui part d'une zone située au dessous de l'ouverture elliptique et du joint (3) dans la bride d'admission (12).

5. Vanne d'arrêt suivant l'une quelconque des revendications précédentes, caractérisée en ce que l'un des pourtour, du côté étroit de l'ouverture elliptique dans la bride d'admission (12), est disposé sensiblement à la verticale de l'un des côtés du tuyau de descente (16).

6. Vanne d'arrêt suivant l'une quelconque des revendications précédentes, caractérisée en ce que le corps de vanne (2) peut être reculé dans son guidage (14) assez loin pour qu'en position tournée de 180°, il demeure avec sa face frontale (18) en dehors de la ligne de projection tracée entre le bord de l'ouverture elliptique dans la bride d'admission (12) et la paroi, située en dessous, du tuyau de descente (16).

7. Vanne d'ârret suivant l'une quelconque des revendications précédentes, caractérisée en ce que le tuyau de descente (16) est disposé incliné, par rapport à la verticale, au maximum de l'angle de talus (par exemple 30°) du produit en vrac à vider, en particulier avec une pente disposée en sens opposé à celle du guidage (14).

8. Vanne d'arrêt suivant l'une quelconque des revendications précédentes, caractérisée en ce que le tuyau de descente cylindrique (16) se raccorde, avec des lignes, ou des arêtes, d'intersection (22), au côté inférieur du guidage (14) disposé incliné dans le carter de vanne (1).

**FIG.1**

**FIG.2**

FIG.3

# FIG.4